(19) Europäisches Patentamt

European Patent Office

Office européen des brevets

(11) **EP 0 693 357 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.[7]: **B29C 49/04**, B29C 49/78, B29C 47/92

(21) Anmeldenummer: **95109413.5**

(22) Anmeldetag: **19.06.1995**

(54) **Verfahren zum Extrusionsblasformen von Hohlkörpern aus thermoplastischem Kunststoff**

Method for extrusion blow moulding hollow bodies of thermoplastic material

Procédé de moulage de corps creux en matière thermoplastique par extrusion soufflage

(84) Benannte Vertragsstaaten:
**AT BE CH DE ES FR GB IE IT LI NL**

(30) Priorität: **20.06.1994 DE 4421171**

(43) Veröffentlichungstag der Anmeldung:
**24.01.1996 Patentblatt 1996/04**

(73) Patentinhaber: **Feuerherm, Harald**
**D-53840 Troisdorf (DE)**

(72) Erfinder:
• **Feuerherm,Harald**
**D-53840 Troisdorf (DE)**

• **Deckwerth,Horst**
**D-53840 Troisdorf (DE)**

(74) Vertreter: **Albrecht, Rainer Harald, Dr.-Ing. et al**
**Patentanwälte**
**Andrejewski, Honke & Sozien,**
**Theaterplatz 3**
**45127 Essen (DE)**

(56) Entgegenhaltungen:
**EP-A- 0 026 828          EP-A- 0 345 474**
**EP-A- 0 536 438          EP-A- 0 685 315**
**EP-B- 0 162 045          DE-A- 3 935 338**
**DE-A- 3 936 301**

**Beschreibung**

Die Erfindung betrifft ein Verfahren zum Extrusionsblasformen von Hohlkörpern aus thermoplastischem Kunststoff, bei dem schlauchförmige Vorformlinge mittels eines Schneckenextruders aus dem nach Maßgabe eines Wanddickenprogramms gesteuerten Düsenspalt eines Strangpreßkopfes extrudiert und in folgenden Arbeitstakten die extrudierten Vorformlinge in einer Blasform zu Hohlkörpern aufgeweitet, die Hohlkörper ausgeformt und anhaftende Abfallbutzen entfernt werden.

Das den Düsenspalt steuernde Wanddickenprogramm weist mindestens ein ausgeprägtes Funktionsmaximum auf, dem ein Vorformlingsabschnitt großer Wandstärke zugeordnet ist. Der dem Funktionsmaximum zugeordnete Vorformlingsabschnitt unterliegt in der Blasform einer starken Reckung. Je extremer die Programmkurve in einzelnen Bereichen eingestellt ist, um so genauer muß das zu diesen Punkten gehörende Material, welches der größten Reckung unterworfen ist, auch an der richtigen Stelle in der Blasform positioniert werden. Abweichungen von mehr als ± 1 % bezogen auf die Höhe der Blasform führen zu erheblichen Qualitätseinbußen in Form eines Hohlkörperverzugs, geringeren Stauchwerten und geringeren Festigkeitseigenschaften des fertigen Hohlkörpers. Um sicherzustellen, daß die Vorformlinge eine vorgegebene Soll-Lage relativ zur Blasform einnehmen und außerdem die aus den Vorformlingen gefertigten Hohlkörper das vorgegebene Sollgewicht aufweisen, ist eine Regelung des Verfahrens erforderlich, welche mindestens auf die Drehzahl des Schneckenextruders sowie den Düsenspalt des Strangpreßkopfes Einfluß nimmt.

Bei einem aus EP-A-0 345 474 bekannten Verfahren werden an den Hohlkörpern zwei unterschiedliche Gewichtsmessungen durchgeführt und nach Maßgabe der Gewichtsmeßwerte die. Schneckendrehzahl und der Düsenspalt des Strangpreßkopfes gesteuert. Vorzugsweise werden das Bruttogewicht der Hohlkörper im Anschluß an die Entformung aus der Blasform sowie das Nettogewicht der Hohlkörper, nach vorangegangener Entfernung der Abfallbutzen, gemessen und diese Meßwerte für das Regelungsverfahren verwendet. Das Verfahren hat sich an sich bewährt. Da die Gewichtsmeßwerte systembedingt aber frühestens nach dem vierten Arbeitstakt vorliegen, und zwar im Anschluß an Vorformlingsbildung (Takt 1), Aufweitung in der Blasform (Takt 2) und Entfernung der Abfallbutzen (Takt 3), reagiert das Verfahren auf Störungen bei der Extrusion, beispielsweise infolge geänderter Massetemperaturen, Schwankungen der Förderleistung, Änderungen der Materialeigenschaften, und dergleichen, mit erheblicher Zeitverzögerung. Zwischenzeitlich im zweiten bis vierten Arbeitstakt gefertigte Vorformlinge können zu fehlerhaften Hohlkörpern führen. Das Erfordernis von zwei Gewichtsmeßeinrichtungen erfordert ferner einen beachtlichen anlagentechnischen Aufwand.

Bei einem aus EP-A-0 026 828 bekannten Verfahren ist eine optische Meßvorrichtung zur Erfassung der Unterkante der extrudierten Vorformlinge vorgesehen, die in einem vorgegebenen Abstand von dem Düsenspalt des Strangpreßkopfes positioniert ist und bei Erfassung der Vorformlings-Unterkante die Bewegung der Blasform steuert. Der Zeitpunkt, zu dem der Vorformling seine Soll-Lage erreicht, wird ebenfalls gemessen und mit einem Soll-Zeitpunkt verglichen. Nach Maßgabe der Sollwert-Abweichung wird die Drehzahl des Schneckenextruders geregelt, mit dem Ziel, die Zeit, in welcher ein Vorformling gebildet wird, möglichst konstant zu halten. Ferner werden die Gewichte der Hohlkörper gemessen. Treten Gewichtsabweichungen von einem Sollgewicht auf, so erfolgt eine Korrektur des Düsenspaltes des Strangpreßkopfes. Aufgrund der Wechselwirkung zwischen den Parametern sind mehrere Regelkreise erforderlich, die in bestimmter Reihenfolge aktiviert werden. Priorität hat die Erfassung des Hohlkörpergewichtes. Wird eine Gewichtsabweichung festgestellt, so erfolgt eine Korrektur des Düsenspaltes. Es resultiert eine Längenänderung des Vorformlings, die wiederum eine Änderung der schlauchlängen-abhängig gesteuerten Taktzeit der Maschine bewirkt. Mit Hilfe eines unterlagerten Regelkreises wird die Längenänderung des Vorformlings durch eine Korrektur der Extruderdrehzahl wieder kompensiert und die Taktzeit der Blasformanlage einem Sollwert angepaßt. Ein dritter unterlagerter Regelkreis wird aktiviert, wenn Unterschiede zwischen der Taktzeit der Blasformanlage und der Zykluszeit des Wanddickenprogrammierers infolge einer zu gering gewählten Schrittgröße bei der Extruderdrehzahlkorrektur auftreten. Das Regelungsverfahren arbeitet, insbesondere im Hinblick auf die Lagekorrektur des Vorformlings, langsam. Das Regelungsverfahren ist aufwendig.

Daneben ist es bekannt, die Blasform unabhängig von der Vorformlingslänge zeitlich zu steuern. Der Bewegungsablauf der Blasform und deren Teile wird zeitstarr gesteuert.

Die Praxis hat gezeigt, daß einzelne Blasprodukte einer nach dem Stand der Technik geregelten Blasformanlage noch. beachtliche Stauchwertunterschiede aufweisen können. Wenn das Wanddickenprogramm auf schmale Bereiche beschränkte, ausgeprägte Funktionsmaxima aufweist, sind die Unterschiede besonders groß. Zur Erreichung hoher Stauchwerte bei minimalem Einsatzgewicht sind solche ausgeprägten Funktionsmaxima aber erforderlich. Je extremer die Funktionsmaxima ausgeprägt sind, um so wichtiger ist die Einhaltung der Lage zur Blasform. Werden bei Stichproben an einzelnen Hohlkörpern Unterschreitungen der Mindeststauchwerte festgestellt, so ist die ganze Produktions-charge unbrauchbar, denn ein unzureichender Stauchwert eines einzigen Hohlkörpers kann in der Praxis die Ursache dafür sein, daß beispielsweise ein Stapel aus gefüllten Kanistern kippt. Um bei dem Betreiben des Verfahrens auf der sicheren Seite zu liegen, hilft man sich in der Praxis häufig damit, daß die Kurve des Wanddickenprogramms unter Reduzierung der Funktionsmaxima, bei gleichzeitiger Verbreiterung der Funktionsspitzen, verschliffen wird, wobei erhöhter Materialbedarf oder geringere Stauchwerte in Kauf genommen werden. Das ist unbefriedigend.

Der Erfindung liegt die Aufgabe zugrunde, ein Verfahren zum Extrusionsblasformen von Hohlkörpern der eingangs beschriebenen Art anzugeben, bei dem Gewichtsabweichungen der Hohlkörper sowie Abweichungen von der vorgegebenen. Materialverteilung in den Hohlkörpern, insbesondere in Hohlkörperabschnitten, die in der Blasform einer besonders starken Reckung unterliegen, schnell und sicher ausgeregelt werden können.

Gegenstand der Erfindung und Lösung dieser Aufgabe ist ein Verfahren zum Extrusionsblasformen von Hohlkörpern aus thermoplastischem Kunststoff, bei dem schlauchförmige Vorformlinge mittels eines Schneckenextruders aus dem nach Maßgabe eines Wanddickenprogramms gesteuerten Düsenspalt eines Strangpreßkopfes extrudiert und in folgenden Arbeitstakten die extrudierten Vorformlinge in einer Blasform zu Hohlkörpern aufgeweitet, die Hohlkörper ausgeformt und anhaftende Abfallbutzen entfernt werden, wobei

zu jedem Vorformling die bis zum Erreichen einer vorgegebenen Schlauchlänge benötigte Extrusionszeit gemessen, deren Sollwertabweichung von einem Sollwert bestimmt und die Sollwertabweichung zusammen mit dem Istwert für die Drehzahl und/oder der Drehzahländerung des Schneckenextruders sowie dem Istwert für den Düsenspalt und/oder der Düsenspaltänderung unter Zuordnung zum Vorformling und daraus hergestelltem Hohlkörper in einem Rechner gespeichert wird,

die Gewichte der Hohlkörper gemessen und Gewichtsabweichungen von einem vorgegebenen Sollgewicht mit den zugeordneten, gespeicherten Sollwertabweichungen der Extrusionszeit paarweise als Regelabweichungen für die Festlegung erforderlicher Drehzahl- und Düsenspaltkorrekturen eingesetzt werden und

aus den gespeicherten Drehzahl- und Düsenspaltwerten sowie den ermittelten Drehzahl- und Düsenspaltkorrekturen die Betriebsparameter für die Extrusion in einem folgenden Arbeitstakt festgelegt werden.

Die paarweise Verwendung zugeordneten Extrusionszeit- und Gewichtsmeßwerte, die an ein und demselben Gegenstand in unterschiedlichen Fertigungsstufen erfaßt werden, bilden einen Satz von Informationen, der es ermöglicht, die Schneckendrehzahl und den Düsenspalt gleichzeitig so zu verändern, daß schon meistens die im folgenden Zeittakt extrudierten Vorformlinge die vorgegebene Extrusionszeit und die daraus hergestellten Hohlkörper das vorgegebene Sollgewicht aufweisen. Im Rahmen der Erfindung liegt es, als Gewichtsmeßwert das Nettogewicht des Hohlkörpers nach Entfernen der Abfallbutzen oder das Hohlkörperbruttogewicht, welches unmittelbar im Anschluß an die Entformung des Hohlkörpers aus der Blasform gemessen wird, oder auch ein anderes für das der Blasform entnommene Blasprodukt charakteristisches Vergleichsgewicht, welches auch die Summe von Teilgewichten darstellen kann, einzusetzen. Im Rahmen der Erfindung liegt es, auch das Gewicht des unteren Abfallbutzens als Gewichtsmeßwert einzusetzen. Da die Extrusionszeit schon in einem vorangegangenen Zeittakt ermittelt wurde, können die erforderlichen Regelungen durchgeführt werden, sobald der noch erforderliche Gewichtsmeßwert vorliegt. Störgrößen sind auf diese Weise so frühzeitig durch Änderung der Schneckendrehzahl und des Düsenspaltes korrigierbar.

Eine weitere Verbesserung des erfindungsgemäßen Verfahrens ist dadurch erreichbar, daß eine - beispielsweise beim Anfahren, Chargenwechsel oder Optimieren - neu auftretende Sollwertabweichung der Extrusionszeit, welche einen gegebenen Grenzwert übersteigt, im nächsten Arbeitstakt ohne Rücksicht auf den noch nicht vorhandenen Gewichtsmeßwert durch Änderungen der Schneckendrehzahl und/oder durch Änderung des Düsenspaltes beseitigt wird. Wird eine Sollwertabweichung festgestellt, so hat die Korrektur der Regelgröße, welche die Lage beeinflußt, Priorität. Die Korrektur erfolgt so, daß die Vorformlingsabschnitte, die in der Blasform einer besonders starken Reckung unterliegen, ihre SollLage einnehmen. Eine alternative Ausgestaltung des erfindungsgemäßen Verfahrens sieht vor, daß schon im Takt der Vorformlingsbildung eine Stellgröße für die Lagekorrektur des Vorformlings aktiviert wird, wenn die Sollwertabweichung der gemessenen Extrusionszeit einen vorgegebenen Grenzwert übersteigt, wobei für die Messung der Extrusionszeit eine Meßeinrichtung verwendet wird, die entlang des Extrusionsweges mit Abstand von der Vorformlingsunterkante des vollständig extrudierten Vorformlings angeordnet ist. Die Stellgröße für die Lagekorrektur des Vorformlings ist dem Betrage nach so bemessen, daß der einem Funktionsmaximum des Wanddickenprogramms zugeordnete Vorformlingsquerschnitt in der Blasform dort positioniert ist, wo eine dem Funktionsmaximalwert zugeordnete maximale Reckung beim Blasvorgang auftritt.

Die vorstehend beschriebenen Ausgestaltungen der Erfindung erlauben eine besonders schnelle Regelung der Vorformlingslage. Der Regeleingriff hat nur vorläufigen Charakter. Sobald der zur Extrusionszeit zugehörende Gewichtsmeßwert einige Zeittakte später vorliegt, werden die erforderlichen Drehzahl- und Düsenspaltkorrekturen so vorgenommen, daß bei den nachfolgenden Vorformlingen nicht nur die Extrusionszeit sondern auch deren Gewicht bzw. das Gewicht der aus den Vorformlingen hergestellten Hohlkörpern den Sollwerten entsprechen. Falsche Regelungen, die sich durch den vorläufigen Regeleingriff ergeben haben können, können in einem Schritt korrigiert werden. Nach dieser abschließenden Korrektur haben die Vorformlinge nicht nur die richtige Lage zur Blasform sondern auch das richtige Gewicht. Die Erfindung geht von der Überlegung aus, daß für die Qualität eines Hohlkörpers in erster Linie die Einhaltung von Mindeststauchwerten entscheidend sind und die präzise Einhaltung der Sollgewichte demgegenüber von etwas geringerer Bedeutung ist. Zur Erreichung eines hohen Stauchwertes bei geringem Einsatzgewicht sind Wanddickenprogramme mit spitz gesteckten Funktionsmaxima erforderlich. Wird das Verfahren mit einem solchen Wanddickenprogramm betrieben, so kommt es entscheidend darauf an, daß die den Funktionsmaxima zugeordneten Vorformlingsabschnitte ihre Soll-Lage zur Blasform einnehmen. Der Nachteil, daß einige der Hohlkörper im Zuge der Fertigung Hohlkörpergewichte aufweisen können, die geringfügig von dem Sollgewicht abweichen, kann demgegenüber ohne weiteres in Kauf genommen werden.

Bei der praktischen Ausführung des erfindungsgemäßen Verfahrens wird man zweckmäßigerweise Änderungen der Schneckendrehzahl und des Düsenspaltes nur dann einleiten, wenn die Sollwertabweichungen der Extrusionszeit in ein vorgegebenes, durch innere Grenzwerte und äußere Grenzwerte begrenztes Toleranzfeld fallen, wobei die inneren Grenzwerte einen schmalen Bandbereich mit positiven und negativen Abweichungen von dem Sollwert der Extrusionszeit begrenzen und wobei die äußeren Grenzwerte maximal zulässige positive und negative Abweichungen von dem Sollwert der Extrusionszeit definieren.

Für die weitere Ausgestaltung des erfindungsgemäßen Verfahrens bieten sich verschiedene Möglichkeiten an. Bei einer ersten Ausführung der Erfindung wird nach Maßgabe der Gewichtsabweichungen von dem vorgegebenen Sollgewicht die Drehzahl des Schneckenextruders verändert und erfolgt nach Maßgabe der Gewichtsabweichungen in Verbindung mit den zugeordneten Sollwertabweichungen der Extrusionszeit zusätzlich eine Korrektur des Düsenspaltes. Unter Zugrundelegung linearer Abhängigkeiten wird die Drehzahländerung $\Delta n_S$ der Schneckendrehzahl $n_S$ und die Verstellung $\Delta s_A$ des Düsenspaltes $s_A$ in Abhängigkeit von den Extrusionszeit- und Gewichtsmeßwerten $t_{Ist}$, $G_{Ist}$ und den zugeordneten Sollwerten $t_{Soll}$, $G_{Soll}$ nach folgendem Algorithmus

$$\Delta n_s = n_s \cdot \frac{(G_{Soll} - G_{Ist})}{G_{soll}}$$

$$\Delta s_A = s_A \cdot (1 - \frac{t_{Ist}}{t_{Soll}} \cdot \frac{n_s}{n_s + \Delta n_s})$$

vorgenommen. Als Gewichtsmeßwert $G_{Ist}$ wird vorzugsweise das Bruttogewicht der Hohlkörper einschließlich der anhaftenden Abfallbutzen, gemessen im Anschluß an die Entformung aus der Blasform, verwendet. Im Rahmen der Erfindung liegt es aber auch, andere Gewichtsmeßwerte, insbesondere das Nettogewicht oder ein anderes für das der Blasform entnommene Blasprodukt charakteristisches Vergleichsgewicht, welches auch die Summe von Teilgewichten darstellen kann, für das Regelungsverfahren einzusetzen.

Gemäß einer anderen Ausführung der Erfindung wird nach Maßgabe der Gewichtsabweichungen von dem vorgegebenen Sollgewicht der Düsenspalt des Strangpreßkopfes korrigiert und wird nach Maßgabe der Gewichtsabweichungen in Verbindung mit den zugeordneten Sollwertabweichungen der Extrusionszeit zusätzlich eine Veränderung der Schneckendrehzahl vorgenommen.

Unter Zugrundelegung linearer Abhängigkeiten wird die Verstellung des Düsenspaltes $\Delta s_A$ und die Drehzahländerung $\Delta n_S$ der Schneckendrehzahl $\Delta n_S$ in Abhängigkeit von den Extrusionszeit- und Gewichtsmeßwerten $t_{Ist}$, $G_{Ist}$ und den zugeordneten Sollwerten $t_{Soll}$, $G_{Soll}$ nach folgendem Algorithmus

$$\Delta s_A = s_A \cdot \frac{(G_{Soll} - G_{Ist})}{G_{soll}}$$

$$\Delta n_S = n_S \cdot (1 - \frac{t_{Soll}}{t_{Ist}} \cdot \frac{s_A}{s_A + \Delta s_A})$$

vorgenommen. Als Gewichtsmeßwert $G_{Ist}$ wird hier vorzugsweise das Nettogewicht des Hohlkörpers nach Entfernen der Abfallbutzen verwendet. Auch die Bruttohohlkörpergewichte oder andere Vergleichsgewichte, die auch die Summe von Teilgewichten darstellen können, sind jedoch einsetzbar.

Für die Anordnung der Meßeinrichtung entlang des Extrusionsweges zur Messung der Extrusionszeit bestehen verschiedene Möglichkeiten. Gemäß einer ersten Ausführungsform wird die Extrusionszeit durch eine Meßeinrichtung erfaßt, die nahe der Unterkante der vollständig extrudierten Vorformlinge positioniert ist. Der Abstand der Meßeinrichtung von dem Düsenspalt wird so gewählt, daß auch dann, wenn der Vorformling nicht die Soll-Länge erreicht noch ein Meßsignal abgegeben wird.

Eine andere vorteilhafte Ausführung des erfindungsgemäßen Verfahrens sieht vor, daß die Extrusionszeit durch eine Meßeinrichtung erfaßt wird, deren Abstand von dem Düsenspalt so bemessen ist, daß dieser Abstand der Soll-Länge eines Vorformlingsabschnittes von der Vorformlingsunterkante oder einer Referenzmarkierung bis zu einem kritischen Vorformlingsquerschnitt, der einem Funktions-maximum des Wanddickenprogramms zugeordnet ist, entspricht. Bei dieser Ausführung des erfindungsgemäßen Verfahrens ist der Extrusionszeitmeßwert einem Funktionsmaximum des Wanddickenprogramms unmittelbar zugeordnet. Entspricht der Extrusionszeitmeßwert dem Sollwert, so wird genau zu diesem Zeitpunkt der Vorformlingsabschnitt extrudiert, der in der Blasform einer besonders starken Reckung unterliegt. Da bei dieser Ausführung des erfindungsgemäßen Verfahrens die Zeitmessung nicht am Ende des Vorformlings, also nach vollständigem Ablauf der Extrusion, erfolgt, sollte durch eine Überwachung sichergestellt werden, daß die Restextrusion des Vorformlings nach der Messung nicht noch gestört wird. In weiterer Ausgestaltung lehrt die Erfindung deshalb, daß der programmkonforme Ablauf der Restextrusion überprüft wird und ein Störsignal abgegeben wird, wenn bei der Restextrusion des Vorformlings eine Störung auftritt, wobei der aus dem betreffenden Vorformling gefertigte Hohlkörper aufgrund des Störsignals ausgeschleust wird. Die Überwachung der Restextrusion ist auf verschiedene Weise möglich. Wenn beispielsweise die im nächsten Arbeitstakt gemessene Extrusionszeit - im Rahmen der zulässigen, betriebsbedingten Abweichungen - der zuvor gemessenen Extrusionszeit entspricht, so ist die Restextrusion ohne Störungen ausgeführt worden. Die Überwachung der Restextrusion kann folglich in einem Vergleich der in aufeinanderfolgenden Arbeitstakten gemessenen Extrusionszeiten bestehen. Zur Überwachung der Restextrusion kann ferner eine zusätzliche Zeitmeßeinrichtung nahe der Unterkante der vollständig extrudierten Vorformlinge angeordnet werden, wobei diese zusätzliche Zeitmeßeinrichtung das Störsignal auslöst, wenn der Zeitmeßwert vorgegebene Grenzwerte erreicht.

Wenn eine Verschiebung des kritischen Querschnitts des Vorformlings relativ zur Blasform festgestellt wird, obwohl die Gewichts- und Extrusionszeitmeßwerte den Sollwerten entsprechen, ist eine Feinkorrektur zweckmäßig.

Zum Zwecke der Feinkorrektur kann die Relativbewegung zwischen der Blasform und dem Vorformling geändert und/oder der Ablauf des Wanddickenprogramms relativ zum Vorformling verschoben oder mit einem kurzzeitigen Zwischenstop an einem vorgegebenen Profilpunkt versehen wird und/oder die Einformzeit geändert bzw. ein andere vergleichbare Zeitkorrektur vorgenommen werden. Ferner kann zum Zwecke einer Feinkorrektur im Wanddikkenprogramm die Länge des Programmkurvenabschnitts, der dem Abschnitt zwischen der Vorformlingsunterkante und einem in bezug auf die in der Blasform später auftretende Reckung des Vorformlings kritischen Querschnitt des Vorformlings zugeordnet ist, verändert werden.

In weiterer Ausgestaltung lehrt die Erfindung, daß die Unterkante der Vorformlinge durch mindestens eine Lichtschranke erfaßt wird, welche die Zeitmessung der Extrusionszeit stoppt. Vorzugsweise sind mehrere Lichtschranken in einer horizontalen Ebene vorgesehen, wobei durch Mittelwertbildung der von den Lichtschranken gestoppten Zeitmeßwerte die für den Sollwertvergleich eingesetzte Extrusionszeit (Ist-Zeit) bestimmt wird. In weiterer Ausgestaltung lehrt die Erfindung, daß die von mehreren horizontal nebeneinander angeordneten Lichtschranken gestoppten Zeitmeßwerte miteinander verglichen werden und daß ein dem Vorformling zugeordnetes Fehlersignal gespeichert wird, wenn die Zeitdifferenzen zwischen den gestoppten Zeitmeßwerten außerhalb eines vorgegebenen Toleranzbereiches liegen. Das Fehlersignal kann zum Ausschleusen des aus dem betreffenden Vorformling geformten Hohlkörpers und/oder als Regelgröße zur Veränderung eines Betriebsparameters des Extrusionsblasverfahrens verwendet werden. Die zeitliche Abfolge der dem Fehlersignal zugrundeliegenden Meßsignale lassen Rückschlüsse auf die Form der Vorformlingsunterkante zu und erlauben das Erkennen von betrieblichen Störungen. Ein störender Schlauchschieflauf ist ebenso identifizierbar wie eine zu große oder zu geringe Stützluftmenge. Nach bevorzugter Ausführung des erfindungsgemäßen Verfahrens wird daher nach Maßgabe der zeitlichen Abfolge der dem Fehlersignal zugrundeliegenden Meßsignale die Stützluftmenge oder ein schiefer Schlauchlauf korrigiert. Eine große Meßgenauigkeit und sichere Auswertung der Meßsignale ist insbesondere dann gewährleistet, wenn die Lichtschranken in Gruppen angeordnet sind, die horizontal unter einem Winkel von vorzugsweise 90° zueinander ausgerichtet sind und jeweils mindestens zwei parallele Lichtschranken umfassen. Die Meßsignale werden in der vorstehend beschriebenen Weise ausgewertet. Außerdem kann durch Mittelwertbildung der von der Lichtschranke gestoppten Zeitmeßwerte die für den Sollwertvergleich eingesetzte Extrusionszeit bestimmt werden.

Es versteht sich, daß anstelle von Lichtschranken in entsprechender Weise auch andere Meßeinrichtungen zur Erfassung der Vorformlingsunterkante und/oder einer an dem Vorformling angebrachten Markierung eingesetzt werden können, deren Meßsignale in der beschriebenen Weise ausgewertet werden. Die Zeitmessung kann schließlich synchron oder auch zeitlich versetzt mit Beginn des Arbeitstaktes oder durch ein Meßsignal einer unterhalb des Düsenspaltes angeordneten optischen Meßeinrichtung, die z. B. eine Markierung auf dem Vorformling oder die Vorformlingsunterkante erfaßt, gestartet werden.

Im Rahmen der Erfindung liegt es, mehrere Meßeinrichtungen in der Vorformlingsextrusionsrichtung zum Zwecke der Lagekontrolle, Längeneinstellung oder Längenregelung vorzusehen. Wenn die Materialverteilung im Hohlkörper unbefriedigend ist, obwohl die Extrusionszeitmeßwerte und die zugeordneten Gewichtsmeßwerte den Sollwerten entsprechen, sind Feinkorrekturen an Betriebseinstellungen der Blasformanlage zweckmäßig, die in der Figurenbeschreibung noch erläutert werden.

In weiterer Ausbildung des erfindungsgemäßen Verfahrens lehrt die Erfindung, daß ein dem Vorformling zugeordnetes Signal gespeichert wird, wenn die Sollwertabweichung der Extrusionszeit außerhalb eines vorgegebenen betrieblichen Toleranzfeldes liegt, und daß dieses Signal zum Ausschleusen fehlerbehafteter Hohlkörper verwendet wird. Zweckmäßigerweise steuert das Signal eine Sortiervorrichtung, wenn der aus einem mit dem Signal belegten Vorformling geblasene Hohlkörper die Sortiervorrichtung erreicht, wobei der betreffende Hohlkörper ausgeschleust wird. Erfindungsgemäß wird die Extrusionszeit eines Vorformlings nicht nur zur Steuerung und Regelung des Verfahrens, sondern auch als Qualitätsmerkmal des aus dem betreffenden Vorformling hergestellten Hohlkörpers herangezogen.

Beim Anfahren einer Extrusionsblasformanlage sind zunächst erhebliche Sollwertabweichungen der Extrusionszeit zu erwarten. Sobald die Blasformanlage voll ausgeregelt ist und einen stationären Betriebspunkt erreicht hat, ist die mittlere Sollwertabweichung der Extrusionszeit im allgemeinen kleiner. Das betriebliche Toleranzfeld, welches als Kriterium zum Ausschleusen von Hohlkörpern verwendet wird, kann dem angepaßt werden. Während der Anfahrphase oder einem Material-, Chargen- oder Farbwechsel ist es zweckmäßig, unter Inkaufnahme eines etwas erhöhten Materialbedarfes die mittlere Wandstärke der Vorformlinge und damit das Gewicht der Hohlkörper um einige Prozentpunkte zu vergrößern, um sicherzustellen, daß auch bei einem breiteren betrieblichen Toleranzfeld und größeren zulässigen Sollwertabweichungen der Extrusionszeit die geforderten Festigkeitseigenschaften der Hohlkörper erreicht werden. Die Erfindung lehrt in diesem Zusammenhang in weiterer vorteilhafter Ausgestaltung, daß zu den Sollwertabweichungen der Vorformlinge Häufigkeitsverteilungen erstellt und gespeichert werden und daß das betriebliche Toleranzfeld, welches als Kriterium zum Ausschleusen von Hohlkörpern verwendet wird, in Abhängigkeit von der geltenden Häufigkeitsverteilung verändert wird. In Abhängigkeit von der Breite des betrieblichen Toleranzfeldes wird vorzugsweise auch das Sollgewicht verändert, wobei einem schmalen Toleranzfeld ein kleineres Sollgewicht und einem breiteren Toleranzfeld ein größeres Sollgewicht zuzuordnen ist. Eine Anhebung des Sollgewichtes um einige Prozentpunkte gegenüber einem Sollgewicht, welches bei voll ausgeregelter Blasformanlage und stationärem Betriebszustand angestrebt ist, ist für den Anfahrvorgang zweckmäßig. Die Abhängigkeit zwischen dem Sollgewicht, dem betrieblichen Toleranzfeld sowie der Häufigkeitsverteilung der Sollwertabweichung ist durch empirische Funktionen faßbar und zweckmäßigerweise in einem Rechner gespeichert. Bei der Abgabe des Signals zum Ausschleusen fehlerbehafteter Hohlkörper werden die im Rechner abgelegten Funktionen berücksichtigt.

Im Rahmen der Erfindung liegt es ferner, die inneren Grenzwerte $t_{Tol-1}$, $t_{Tol+1}$ des betrieblichen Toleranzfeldes, welche das Kriterium für die Einleitung von Regelkorrekturen bilden, in Abhängigkeit von der geltenden Häufigkeitsverteilung zu verändern. Stochastische Schwankungen der Zeitmeßwerte innerhalb des von den inneren Grenzwerten $t_{Tol-1}$, $t_{Tol+1}$ begrenzten schmalen Bandbereiches sind anlagenabhängig. Bei ausgeregelten, ruhiglaufenden und im stationären Betriebszustand betriebenen Anlagen kann mit einem sehr schmalen Bandbereich gearbeitet werden. Die Zuordnung der Breite des von den Grenzwerten $t_{Tol-1}$, $t_{Tol+1}$ begrenzten Bandbereiches an die Häufigkeitsverteilung ermöglicht eine ständige Anpassung des Bandbereiches an die Anlage bzw. den Betrieb der Anlage.

Im Rahmen der Erfindung liegt es schließlich, daß ein optisches und/oder akustisches Störsignal abgegeben wird und die Hohlkörper ausgeschleust werden, wenn die Sollwertabweichung der gemessenen Extrusionszeit außerhalb eines betrieblichen Toleranzfeldes liegende Grenzwerte erreicht.

Das vorstehend beschriebene erfindungsgemäße Verfahren zeichnet sich durch beachtliche Vorteile aus. Es ermöglicht das Anfahren einer Blasformanlage mit automatischem Übergang in die Produktionsphase, erlaubt eine Optimierung der Hohlkörper und eignet sich selbstverständlich auch bei Materialchargenwechsel und für den stationären Produktionsbetrieb. Es ermöglicht das Arbeiten mit einem Wanddickenprogramm, welches eine Programmkurve mit extrem gesteckten Funktionsmaxima aufweist. Die nach dem erfindungsgemäßen Verfahren gefertigen Hohlkörper zeichnen sich durch hohe Mindeststauchwerte bei minimalem Hohlkörpergewicht aus. Störgrößen können schnell und gezielt ausgeregelt werden unter Ausschußminimierung. Ferner ist eine Kontrolle und Ausschleusen von Hohlkörpern gewährleistet, welche die geforderten mechanischen Werte nicht erreichen. Schließlich ermöglicht das erfindungsgemäße Verfahren die Herstellung von Kanistern und anderen Hohlkörpern mit komplizierter Formgebung in kontinuierlicher Extrusion. Das Verfahren ist.insbesondere auch zur Herstellung von Kunststoffkraftstoffbehältern geeignet, bei denen die Einhaltung von Mindestwandstärken das Hauptproblem ist.

Im folgenden wird die Erfindung anhand einer lediglich ein Ausführungsbeispiel darstellenden Zeichnung erläutert. Es zeigen in schematischer Darstellung

Fig. 1 ein Anlagen- und Regelschema zum Extrusionsblasformen von. Hohlkörpern aus thermoplastischem Kunststoff,

Fig. 2 die Häufigkeitsverteilung für die Sollwertabweichung von der Extrusionszeit bei einer nach dem erfindungsgemäßen Verfahren betriebenen Blasformanlage im Vergleich zum Stand der Technik,

Fig. 3      eine der Vorformlingsunterkante zugeordnete Meßeinrichtung,

Fig. 4      den Schnitt A-A in Figur 3.

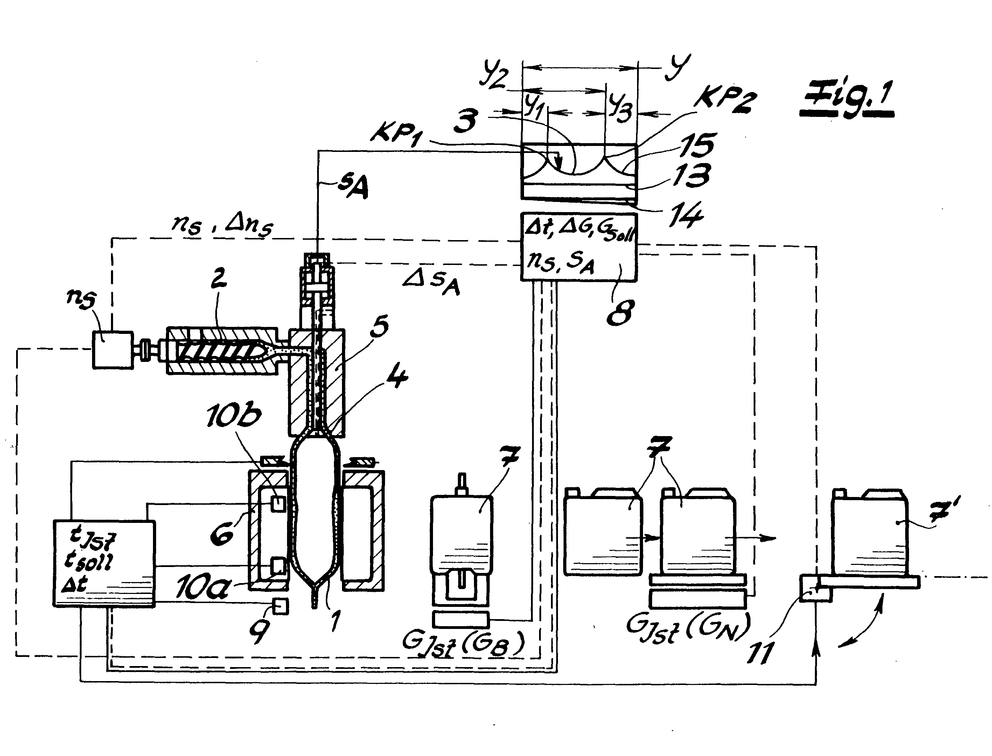

Dem in Fig. 1 dargestellten Anlagen- und Regelschema entnimmt man, daß schlauchförmige Vorformlinge 1 mittels eines Schneckenextruders 2 aus dem nach Maßgabe eines Wanddickenprogramms 3 gesteuerten Düsenspalt 4 eines Strangpreßkopfes 5 extrudiert werden. Die extrudierten Vorformlinge 1 werden anschließend in einer Blasform 6 zu Hohlkörpern 7 aufgeweitet. Die Hohlkörper 7 werden ausgeformt und anhaftende Abfallbutzen entfernt. Zu jedem Vorformling 1 wird die bis zum Erreichen einer vorgegebenen Schlauchlänge benötige Extrusionszeit $t_{Ist}$ gemessen, deren Sollwertabweichung $\Delta t$ von einem Sollwert $t_{Soll}$ bestimmt und die Sollwertabweichung $\Delta t$ zusammen mit den Ist-Werten für die Drehzahl $n_S$ des Schneckenextruders 2 und den Düsenspalt $s_A$ in einem Rechner 8 gespeichert. Die Speicherung erfolgt unter Zuordnung zum Vorformling 1 und dem daraus hergestellten Hohlkörper. Außerdem werden die Gewichte $G_{Ist}$ der Hohlkörper 7 gemessen, und zwar deren Bruttogewichte $G_B$ oder deren Nettogewichte $G_N$. Dabei festgestellte Gewichtsabweichungen $\Delta G$ von einem vorgegebenen Sollgewicht $G_{Soll}$ werden mit den zugeordneten, gespeicherten Sollwertabweichungen $\Delta t$ der Extrusionszeit $t_{Ist}$ paarweise als Regelabweichungen für die Festlegung erforderlicher Drehzahl- und Düsenspaltkorrekturen $\Delta n_S$, $\Delta s_A$ eingesetzt. Aus den gespeicherten Drehzahl- und Düsenspaltwerten sowie den ermittelten Drehzahl- und Düsenspaltkorrekturen $\Delta n_S$, $\Delta s_A$ werden die Betriebsparameter $n_S$, $s_A$ für die Extrusion im folgenden Arbeitstakt festgelegt.

Die Drehzahländerung $\Delta n_S$ der Schneckendrehzahl $n_S$ und die Verstellung $\Delta s_A$ des Düsenspaltes $s_A$ wird in Abhängigkeit von den Extrusionszeit- und Gewichtsmeßwerten $t_{Ist}$ und $G_{Ist}$ und den zugeordneten Sollwerten $t_{Soll}$, $G_{Soll}$ nach folgendem Algorithmus

$$\Delta s_A = s_A \cdot \frac{(G_{Soll} - G_{Ist})}{G_{soll}}$$

$$\Delta n_S = n_S \cdot (1 - \frac{t_{Soll}}{t_{Ist}} \cdot \frac{s_A}{s_A + \Delta s_A}$$

vorgenommen. Dem angegebenen Algorithmus entnimmt man, daß nach Maßgabe der Gewichtsänderung $\Delta G$ von dem vorgegebenen Sollgewicht $G_{Soll}$ der Düsenspalt $\Delta s_A$ verändert wird. Außerdem wird nach Maßgabe der Gewichtsabweichungen $\Delta G$, jedoch in Verbindung mit den zugeordneten Sollwertabweichungen der Extrusionszeit $\Delta t$, zusätzlich eine Korrektur der Drehzahl $\Delta n_S$ des Schneckenextruders vorgenommen. Drehzahl- und Düsenspaltkorrekturen $\Delta n_S$, $\Delta s_A$ erfolgen gleichzeitig. Als Gewichtsmeßwert wird vorzugsweise das Nettogewicht $G_N$ verwendet.

Die Extrusionszeit $t_{Ist}$ wird von einer Meßeinrichtung 9 erfaßt, die im Bereich der Unterkante der Vorformlinge 1, nach deren vollständiger Extrusion, positioniert ist und mindestens eine Lichtschranke aufweist, welche die Zeitmessung der Extrusionszeit $t_{Ist}$ stoppt. Der Abstand der Meßeinrichtung 9 von dem Düsenspalt 4 entspricht etwa der Soll-Länge der Vorformlinge 1, ist aber so gewählt, daß auch dann, wenn die tatsächliche Vorformlinglänge etwas kürzer ist als die Soll-Länge, ein Meßsignal noch abgegeben wird. Zweckmäßigerweise umfaßt die Meßeinrichtung 9 mehrere Lichtschranken. Durch Mittelwertbildung der von den Lichtschranken gestoppten Zeitmeßwerte wird die für den Sollwertvergleich eingesetzte Extrusionszeit $t_{Ist}$ bestimmt. Auf diese Weise können Meßfehler aufgrund von Unregelmäßigkeiten an der Unterkante des Vorformlings weitestgehend eliminiert werden.

In der Vorformlingsextrusionsrichtung sind zum Zwecke der Lagekontrolle, Längeneinstellung oder Längenregelung weitere Meßeinrichtungen 10a, 10b vorgesehen. Durch zwei oder mehr untereinander angeordnete Meßeinrichtungen 10b, 10a, 9 und einem Extruxionszeitvergleich zwischen dem Start und den Meßeinrichtungen können Betriebsparameter zum Ausgleich von Durchhängung und/oder Schrumpfung ermittelt werden.

Wenn die Sollwertabweichung $\Delta t$ der gemessenen Extrusionszeit außerhalb eines vorgegebenen betrieblichen Toleranzfeldes liegt, wird ein dem Vorformling 1 zugeordnetes Signal gespeichert, welches zum Ausschleusen fehlerbehafteter Hohlkörper verwendet wird. Das Signal steuert dazu eine Sortiervorrichtung 11 an, wenn der aus einem mit dem Signal belegten Vorformling geblasene Hohlkörper 7' die Sortiervorrichtung erreicht. Der betreffende Hohlkörper 7' wird dann ausgeschleust.

Die anliegende Tabelle zeigt anhand von Beispielen Betriebszustände, die bei dem erfindungsgemäßen Verfahren auftreten können und die dann resultierenden Verfahrensmaßnahmen. Es wird angenommen, daß der Sollwert $t_{Soll}$ für die Extrusionszeit 12,0 sec. beträgt. Liegt die gemessene Extrusionszeit $t_{Vfl}$ in einem Bereich von 11,9 bis 12,1 sec., so nimmt der Vorformling die vorbestimmte Lage relativ zur Blasform ein. Verdickte Wandabschnitte des Vorformlings, denen Funktionsmaxima des Wanddickenprogramms zugeordnet sind, sind in Blasformbereichen positioniert, in denen die größte Reckung auftritt. Die aus diesen Vorformlingen gefertigen Hohlkörper haben die geforderten Eigenschaften. Liegt die gemessene Extrusionszeit in einem Toleranzfeld zwischen $t_{Tol2-}$ (11,6 sec.) und $t_{Tol2+}$ (12,4 sec.), aber außerhalb des dem Sollwert $t_{Soll}$ zugerechneten Bandes von 11,9 bis 12,1 sec., so nimmt der Vorformling eine noch akzeptable Lage in der Blasform ein und der daraus gefertigte Hohlkörper ist brauchbar. Jedoch wird nach Maßgabe der Sollwertabweichung $\Delta t$ eine Regelung der Schneckendrehzahl $n_S$ vorgenommen und werden die Extrusionsparameter, im Ausführungsbeispiel die Schneckendrehzahl $n_S$, auf diese Weise korrigiert. Liegt die Sollwertabweichung $\Delta t$ außerhalb des durch $t_{Tol2-}$ und $t_{Tol2+}$ vorgegebenen betrieblichen Toleranzfeldes $t_{Tol2-}$, $t_{Tol2+}$, so wird ein dem Vorformling zugeordnetes Signal gespeichert. Das Signal steuert in der beschriebenen Weise die Sortiervorrichtung 11 zum Ausschleusen fehlerbehafteter Hohlkörper, wenn der betreffende Hohlkörper die Sortiervorrichtung erreicht hat. Nach Maßgabe der Sollwertabweichung t erfolgt auch hier eine Regelung der Schneckendrehzahl. Erreicht die Sollwertabweichung schließlich außerhalb des betrieblichen Toleranzfeldes liegende Grenzwerte $t_{Tol3-}$, $t_{Tol3+}$, so wird ein optisches und/oder akustisches Störsignal ohne Zeitverzögerung abgegeben und alle Hohlkörper werden ausgeschleust.

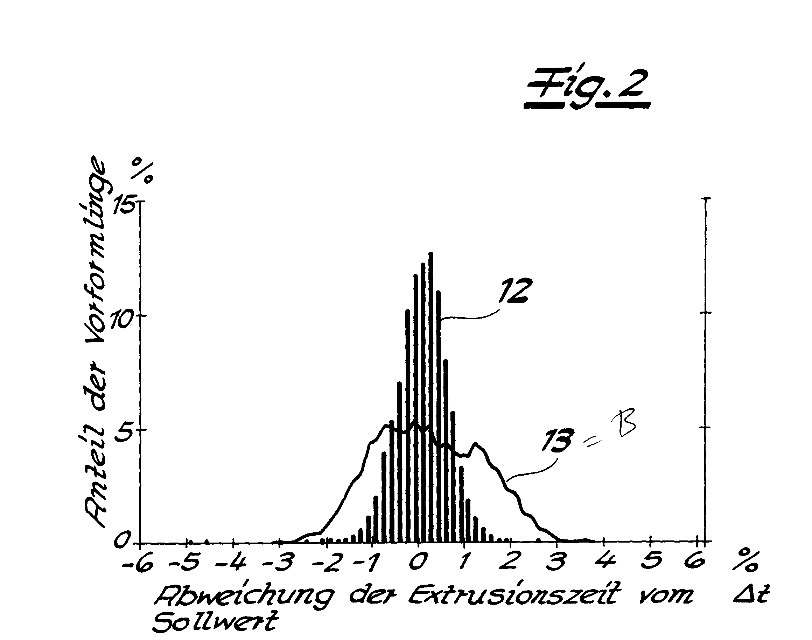

Die Fig. 2 zeigt die Häufigkeitsverteilung für die Sollwertabweichung $\Delta t$ von der Extrusionszeit $t_{Ist}$ an einer nach dem erfindungsgemäßen Verfahren betriebenen Blasformanlage im Vergleich zum Stand der Technik. Die Balkendarstellung 12 bezieht sich auf das erfindungsgemäße Verfahren. Die Verteilungskurve B zeigt eine Häufigkeitsverteilung, die bei einer nach einem bekannten Steuer- und Regelungsverfahren betriebenen Blasformanlage gemessen wird. Durch das erfindungsgemäße Verfahren ist erreichbar, daß die Abweichungen $\Delta t$ von der Extrusionszeit in einem vergleichsweise sehr engen Band liegen. Diese enge Häufigkeitsverteilung bei Anwendung des erfindungsgemäßen Verfahrens beruht darauf, daß Störgrößen, welche die Lage der Vorformlinge zur Blasform beeinflussen, schnell und gezielt ausgeregelt werden können.

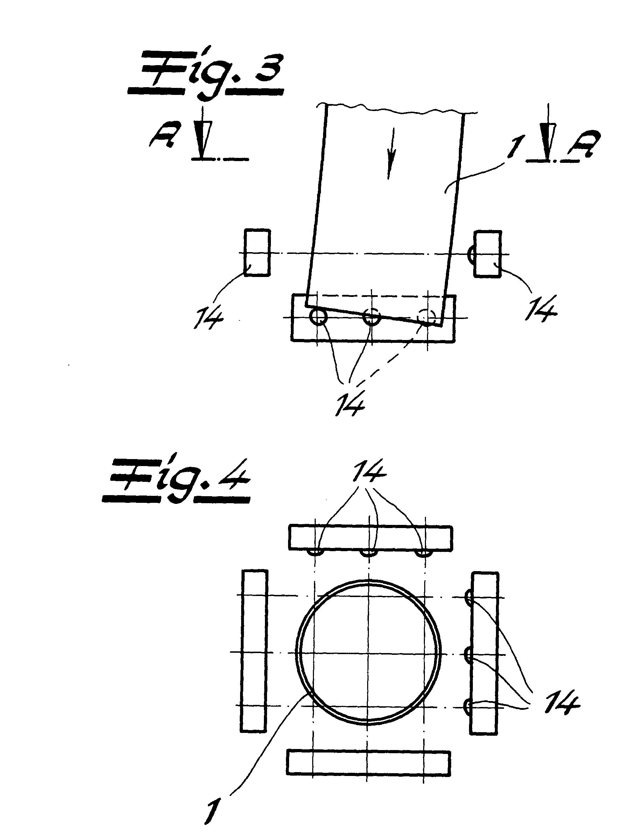

Die Meßeinrichtung 9 umfaßt eine Mehrzahl von Lichtschranken 14, die horizontal nebeneinander angeordnet sind. Bei einer vergleichenden Betrachtung der Fig. 3 und 4 entnimmt man, daß die Lichtschranken 14 in Gruppen angeordnet sind, die horizontal unter einem Winkel von vorzugsweise 90° zueinander ausgerichtet sind und jeweils mindestens zwei parallele Lichtschranken umfassen. Im Ausführungsbeispiel sind die Gruppen in unterschiedlichen horizontalen Ebenen angeordnet. Lichtschranken sollen im Rahmen der Erfindung Fotosensoren ebenso wie andere berührungslos arbeitenden Meßeinrichtungen, die zur Positionserfassung des Vorformlings geeignet sind, umfassen. Die von den Lichtschranken 14 gestoppten Zeitmeßwerte werden miteinander verglichen, und es wird ein dem Vorformling zugeordnetes Fehlersignal gespeichert, wenn die Zeitdifferenzen zwischen den gestoppten Zeitmeßwerten außerhalb eines vorgegebenen Toleranzbereiches liegen. In Fig. 3 ist beispielsweise ein störender Schlauchschieflauf dargestellt. Aus der zeitlichen Abfolge der dem Fehlersignal zugrundeliegenden Meßsignale ist diese Störung erkennbar und kann somit dem Bedienungspersonal optisch und/oder akustisch angezeigt und/oder durch Eingriff in das Regelverfahren korrigiert werden. Ein störender Schlauchschieflauf mindert die Qualität des aus dem betreffenden Vorformling 1 gefertigten Hohlkörpers 7. Folglich wird das Fehlersignal ebenfalls zum Ausschleusen des aus dem betreffenden Vorformling 1 geformten Hohlkörpers 7 verwendet. Zusätzlich kann das Fehlersignal auch als Regelgröße zur Veränderung eines Betriebsparameters des Extrusionsblasverfahrens verwendet werden, z. B. zur Änderung der Temperatur eines oder mehrerer Heiz- oder Kühlsegmente des Strangpreßkopfes 5 oder Heiz- oder Kühleinrichtungen am Vorformling 1. Nicht nur ein störender Schlauchschieflauf sondern auch eine von dem Sollwert abweichende Stützluftmenge ist mit Hilfe der aus mehreren Lichtschranken 14 bestehenden Meßeinrichtung 9 erfaßbar und kann durch Eingriff in das Regelverfahren von Hand oder ggf. auch automatisch korrigiert werden.

Das Wanddickenprogramm 3 unterteilt das Vorformlingsvolumen in n äquidistant verteilte Wanddickenprofilpunkte. Vorzugsweise wird mit n = 25 Wanddickenprofilpunkten gearbeitet. Die Pogrammkurve des Wanddickenprogramms 3 weist auf schmale Bereiche beschränkte, ausgeprägte Funktionsmaxima KP1, KP2 im Abstand y1, y2 (von dem in Extrusionsrichtung vorderen Ende des Vorformlings betrachtet) auf, die Vorformlingsbereichen zugeordnet sind, die in der Blasform stark gereckt werden. Diese Vorformlingsquerschnitte heißen daher auch kritische Querschnitte. Die Programmkurve des Wanddickenprogramms 3 setzt sich im Ausführungsbeispiel zusammen aus einem gleichmäßigen Grundspalt 13, einer Rampe 14 und einer Profilkurve 15. Die Rampe 14 vergrößert vom Beginn der Vorformlingsextrusion an den Düsenspalt 4 des Strangpreßkopfes 5 kontinuierlich. Die Rampe 14 trägt dazu bei, ein Durchhängen des Vorformlings 1 aufgrund des längenabhängigen Gewichtes zu kompensieren.

Die beiden Meßeinrichtungen 10a, 10b sind den kritischen Punkten KP1, KP2 zugeordnet und in einem dem Kurvenabschnitt y2-y1 der Programmkurve korrespondierenden Abstand angeordnet. Die Meßeinrichtungen 9, 10a sind in einem Abstand angeordnet, der dem Programmkurvenabschnitt y3 zugeordnet ist. Erreicht der Vorformling 1 beim Extrusionsvorgang die Meßeinrichtung 10a, so wird zu diesem Zeitpunkt der kritische Vorformlingsquerschnitt KP2 im Düsenspalt 4 produziert.

Wird die Lageregelung nicht auf den hauptkritischen Punkt KP2 sondern auf die Vorformlingslänge nach fast vollständiger Extrusion des Vorformling 1 angelegt und wird eine Verschiebung des kritischen Querschnittes KP2 relativ zur Blasform festgestellt, obwohl die Gewichts- und Extrusionszeitmeßwerte den Sollwerten entsprechen, so sind zum Zwecke der Feinkorrektur folgende Korrekturmaßnahmen allein oder in Kombination möglich:

- Relativbewegung zwischen der Blasform und dem Vorformling ändern;

- Ablauf des Wanddickenprogramms relativ zum Vorformling verschieben;

- Einformzeit ändern oder eine andere vergleichbare Zeitkorrektur vornehmen;

- Länge des Abschnitts y3 der Programmkurve korrigieren.

Die vorstehend beschriebenen Maßnahmen sind auch möglich, um die Restextrusion des dem Programmabschnitt y3 zugeordneten Vorformlingsabschnittes zu steuern.

Änderungen in bezug auf die Durchhängung stellen nach Schwankungen der Schwellung und Förderleistung bei konstanten Maschinenbedingungen die nächst größere Störgröße dar. Die Durchhängung ist in erster Näherung eine Funktion des momentanen Vorformlingsgewichtes und des Düsenspaltquerschnittes. Die Störgrößen sind unterschiedliche Materialeigenschaften und unterschiedliche Massetemperatur. Je extremer das Wanddickenprofil im Vorformling eingestellt werden muß, desto schwieriger ist die Durchhängung beispielsweise durch eine linear steigende Rampe auszugleichen. Wenn die Materialverteilung im Hohlkörper unbefriedigend ist, obwohl die Extrusionszeitmeßwerte und die zugeordneten Gewichtsmeßwerte den Sollwerten entsprechen, sind Feinkorrekturen an Betriebseinstellungen der Blasformanlage zweckmäßig, wobei verschiedene Maßnahmen möglich sind. Als erste Verbesserung empfiehlt die Erfindung den Anteil des Profilfaktors und somit der Profilkurve im Verhältnis zum Grundspalt zu modifizieren. Der Profilfaktor wird mit den Funktionswerten der Programmkurve multipliziert und streckt oder staucht diese. Der Profilfaktor kann die Verwendung eines Grundspaltes ersetzen. Eine weitere Verbesserung kann darin bestehen, daß der Profilfaktor mit einer linear oder exponentiell steigenden Rampe verwendet wird. Schließlich ist es möglich, die Durchhängung näherungsweise durch eine beliebige Kombination aus

a) einer linear steigenden Rampe,

b) einer exponentiell steigenden Rampe,

c) einem modifizierten Profilfaktor im Verhältnis zum Grundspalt,

d) einem Düsenspaltfaktor gleich Summe aus Grundspalt und Profilkurve multipliziert mit einem Profilfaktor,

e) einem reziproken Düsenspaltfaktor

zu beschreiben.

Optimal wäre die Durchhängung durch ein weiteres Programmfeld ähnlich dem Wanddickenprogramm, welches auch synchron zu diesem abläuft, zu jedem Wanddickenpunkt separat einzugeben. Erforderliche Änderungen sind als ein Bruchteil der ermittelten Kurve automatisch addierbar oder subtrahierbar.

Werden Meßeinrichtungen 9, 10a und 10b, wie in der Fig. 1 angegeben, eingesetzt, so können bei Aufteilung des Wanddickenprogramms in Abschnitte ein oder mehrere Abschnitte y1/y2, y1/y3 geregelt werden. Ferner kann die Vorformlingslänge oder die Stützluftmenge und/oder der Stützluftdruck bei geringerem Abstand y2-y1 vergrößert und bei größerem Abstand entsprechend verkleinert werden. Ferner besteht die Möglichkeit, den Ablauf des Wanddickenprogramms an einem oder mehreren Profilpunkten, vorzugsweise am Minimum zwischen den Funktionsmaxima KP1, KP2, kurzzeitig zu unterbrechen. Da die Extrusion des Vorformlings während der Unterbrechung des Programmablaufs fortgesetzt wird, und zwar mit den Betriebseinstellungen zum Zeitpunkt der Programmunterbrechung, resultiert eine Streckung des Vorformlings im Mittelbereich zwischen den Funktionsmaxima. Ist der Abstand y2-y1 zu klein, so ist eine Korrektur dadurch möglich, daß der Profilfaktor verkleinert und der Grundspalt vergrößert oder die Rampe vergrößert wird. Umgekehrte Abhängigkeiten ergeben sich, wenn der Abstand y2-y1 zu groß ist.

| Extrusionszeit $t_{VfI}$ Messwert | Sollwert/Grenzwert Toleranz | sek | Sollwertabweichung (t) | Regelung der Schneckendrehzahl | Verfahrensmaßnahmen |
|---|---|---|---|---|---|
| 13 | $t_{Tol3+}$ | 12,8 | > | – | Störsignal u. Ausschleusen |
| 12,6 | $t_{Tol2+}$ | 12,4 | > | ns> | Speicherung eines Signals zur Steuerung der Sortiervorrichtung |
| 12,3 | $t_{Tol1+}$ | 12,1 | > | ns> | |
| 12,0 | $t_{Soll}$ | | | – | |
| 11,7 | $t_{Tol1-}$ | 11,9 | < | ns< | Speicherung eines Signals zur Steuerung der Sortiervorrichtung |
| 11,4 | $t_{Tol2-}$ | 11,6 | < | ns< | |
| 11,0 | $t_{Tol3-}$ | 11,2 | < | – | Störsignal u. Ausschleusen |

## Patentansprüche

1. Verfahren zum Extrusionsblasformen von Hohlkörpern aus thermoplastischem Kunststoff, bei dem schlauchförmige Vorformlinge (1) mittels eines Schneckenextruders (2) aus dem nach Maßgabe eines Wanddickenprogramms (3) gesteuerten Düsenspalt (4) eines Strangpreßkopfes (5) extrudiert und in folgenden Arbeitstakten die extrudierten Vorformlinge (1) in einer Blasform (6) zu Hohlkörpern (7) aufgeweitet, die Hohlkörper (7) ausgeformt und anhaftende Abfallbutzen entfernt werden, wobei

zu jedem Vorformling (1) die bis zum Erreichen einer vorgegebenen Schlauchlänge benötigte Extrusionszeit ($t_{Ist}$) gemessen, deren Sollwertabweichung ($\Delta t$) von einem Sollwert ($t_{Soll}$) bestimmt und die Sollwertabweichung ($\Delta t$) zusammen mit dem Istwert für die Drehzahl ($n_S$) und/oder der Drehzahländerung ($\Delta n_S$) des Schneckenextruders (2) sowie dem Istwert für den Düsenspalt ($s_A$) und/oder der Düsenspaltänderung ($\Delta s_A$) unter Zuordnung zum Vorformling (1) und daraus hergestelltem Hohlkörper (7) in einem Rechner (8) gespeichert wird,

die Gewichte ($G_{Ist}$) der Hohlkörper (7) gemessen und Gewichtsabweichungen ($\Delta G$) von einem vorgegebenen Sollgewicht ($G_{Soll}$) mit den zugeordneten, gespeicherten Sollwertabweichungen ($\Delta t$) der Extrusionszeit paarweise als Regelabweichungen für die Festlegung erforderlicher Drehzahl- und Düsenspaltkorrekturen ($\Delta n_S$, $\Delta s_A$) eingesetzt werden und

aus den gespeicherten Drehzahl- und Düsenspaltwerten sowie den ermittelten Drehzahl- und Düsenspaltkorrekturen ($\Delta n_S$, $\Delta s_A$) die Betriebsparameter ($n_S$, $s_A$) für die Extrusion in einem folgenden Arbeitstakt festgelegt werden.

2. Verfahren nach Anspruch 1, wobei eine neu auftretende Sollwertabweichung ($\Delta t$) der Extrusionszeit, welche einen vorgegebenen Grenzwert ($t_{Tol-1}$, $t_{Tol+1}$) übersteigt, im nächsten Arbeitstakt ohne Rücksicht auf den noch nicht vorhandenen Gewichtsmeßwert durch Änderung der Schneckendrehzahl ($\Delta n_S$) und/oder durch Änderungen des Düsenspaltes ($\Delta s_A$) beseitigt wird.

3. Verfahren nach Anspruch 1, wobei schon im Takt der Vorformlingsbildung eine Stellgröße für die Lagekorrektur des Vorformlings (1) aktiviert wird, wenn die Sollwert-abweichung ($\Delta t$) der gemessenen Extrusionszeit einen vorgegebenen Grenzwert ($t_{Tol-1}$, $t_{Tol+1}$) übersteigt, wobei für die Messung der Extrusionszeit eine Meßeinrichtung (10a, 10b) verwendet wird, die entlang des Extrusionsweges mit Abstand von der Vorformlingsunterkante des vollständig extrudierten Vorformlings angeordnet ist.

4. Verfahren nach Anspruch 3, wobei die Stellgröße für die Lagekorrektur des Vorformlings (1) dem Betrag nach so bemessen ist, daß der einem Funktionsmaximum (KP1, KP2) des Wanddickenprogramms (3) zugeordnete Vorformlingsquerschnitt in der Blasform (6) dort positioniert ist, wo eine dem Funktionsmaximalwert zugeordnete maximale Reckung beim Blasvorgang auftritt.

5. Verfahren nach einem der Ansprüche 1 bis 4, wobei Änderungen der Schneckendrehzahl ($\Delta n_S$) und des Düsenspaltes ($\Delta s_A$) nur dann eingeleitet werden, wenn die Sollwertabweichungen ($\Delta t$) der Extrusionszeit in ein vorgegebenes, durch innere Grenzwerte ($t_{Tol-1}$, $t_{Tol+1}$) und äußere Grenzwerte ($t_{Tol-2}$, $t_{Tol+2}$) begrenztes Toleranzfeld fallen, wobei die inneren Grenzwerte ($t_{Tol-1}$, $t_{Tol+1}$) einen schmalen Bandbereich mit positiven und negativen Abweichungen von dem Sollwert ($t_{Soll}$) der Extrusionszeit begrenzen und wobei die äußeren Grenzwerte ($t_{Tol-2}$, $t_{Tol+2}$) maximal zulässige positive und negative Abweichungen von dem Sollwert ($t_{Soll}$) der Extrusionszeit definieren.

6. Verfahren nach einem der Ansprüche 1 bis 5, wobei nach Maßgabe der Gewichtsabweichungen ($\Delta G$) von dem vorgegebenen Sollgewicht ($G_{Soll}$) die Drehzahl ($n_S$) des Schneckenextruders (2) verändert wird und wobei nach Maßgabe der Gewichtsabweichungen ($\Delta G$) in Verbindung mit den zugeordneten Sollwertabweichungen ($\Delta t$) der Extrusionszeit zusätzlich eine Korrektur des Düsenspaltes ($s_A$) erfolgt.

7. Verfahren nach Anspruch 6, wobei die Drehzahländerung ($\Delta n_S$) der Schneckendrehzahl ($n_S$) und die Verstellung ($\Delta s_A$) des Düsenspaltes ($s_A$) in Abhängigkeit von den Extrusions-zeit- und Gewichtsmeßwerten ($t_{Ist}$, $G_{Ist}$) und den zugeordneten Sollwerten ($t_{Soll}$, $G_{Soll}$) nach folgendem Algorithmus

$$\Delta n_s = n_s \cdot \frac{(G_{Soll} - G_{Ist})}{G_{soll}}$$

$$\Delta s_A = s_A \cdot \left(1 - \frac{t_{Ist}}{t_{Soll}} \cdot \frac{n_s}{n_s + \Delta n_s}\right)$$

vorgenommen wird.

**8.** Verfahren nach Anspruch 6 oder 7, wobei als Gewichtsmeßwert ($G_{Ist}$) das Bruttogewicht ($G_B$) der Hohlkörper einschließlich der anhaftenden Abfallbutzen, gemessen im Anschluß an die Entformung aus der Blasform, verwendet wird.

**9.** Verfahren nach einem der Ansprüche 1 bis 5, wobei nach Maßgabe der Gewichtsabweichungen ($\Delta G$) von dem vorgegebenen Sollgewicht ($G_{Soll}$) der Düsenspalt ($s_A$) des Strangpreßkopfes korrigiert wird und wobei nach Maßgabe der Gewichtsabweichungen ($\Delta G$) in Verbindung mit den zugeordneten Sollwertabweichungen ($\Delta t$) der Extrusionszeit zusätzlich eine Veränderung der Schneckendrehzahl ($n_S$) erfolgt.

**10.** Verfahren nach Anspruch 9, wobei die Verstellung des Düsenspaltes ($\Delta s_A$) und die Drehzahländerung ($\Delta n_S$) der Schneckendrehzahl ($n_S$) in Abhängigkeit von den Extrusionszeit- und Gewichtsmeßwerten ($t_{Ist}$, $G_{Ist}$) und den zugeord-neten Sollwerten ($t_{Soll}$, $G_{Soll}$) nach folgendem Algorithmus

$$\Delta s_A = s_A \cdot \frac{(G_{Soll} - G_{Ist})}{G_{soll}}$$

$$\Delta n_S = n_S \cdot (1 - \frac{t_{Soll}}{t_{Ist}} \cdot \frac{s_A}{s_A + \Delta s_A})$$

vorgenommen wird.

**11.** Verfahren nach Anspruch 9 oder 10, wobei als Gewichtsmeßwert ($G_{Ist}$) das Nettogewicht ($G_N$) des Hohlkörpers nach Entfernung der Abfallbutzen verwendet wird.

**12.** Verfahren nach einem der Ansprüche 1 bis 11, wobei die Extrusionszeit ($t_{Ist}$) durch eine Meßeinrichtung (9) erfaßt wird, die nahe der Unterkante der vollständig extrudierten Vorformlinge positioniert ist.

**13.** Verfahren nach einem der Ansprüche 1 bis 11, wobei die Extrusionszeit ($t_{Ist}$) durch eine Meßeinrichtung (10a, 10b) erfaßt wird, deren Abstand von dem Düsenspalt (4) so bemessen ist, daß dieser Abstand der Soll-Länge eines Vorformlingsabschnittes von der Vorformlingsunterkante oder einer Referenzmarkierung bis zu einem kritischen Vorformlingsquerschnitt (KP1, KP2), der einem Funktionsmaximum des Wanddickenprogramms (3) zugeordnet ist, entspricht.

**14.** Verfahren nach einem der Ansprüche 1 bis 13, wobei zum Zwecke einer Feinkorrektur die Relativbewegung zwischen der Blasform (6) und dem Vorformling (1) geändert und/oder der Ablauf des Wanddickenprogramms (3) relativ zum Vorformling (1) verschoben oder mit einem Zwischenstop an einem vorgegebenen Profilpunkt versehen wird und/oder die Einformzeit geändert bzw. eine andere vergleichbare Zeitkorrektur vorgenommen und/oder im Wanddickenprogramm (3) die Länge des Programmkurvenabschnitts (y3), der dem Abschnitt zwischen der Vorformlingsunterkante und einem in bezug auf die in der Blasform (6) später auftretende Reckung des Vorformlings kritischen Querschnitt (KP2) des Vorformlings (1) zugeordnet ist, verändert wird, wenn eine Verschiebung des kritischen Querschnitts (KP2) relativ zur Blasform (6) festgestellt wird, obwohl die Gewichts- und Extrusionszeitmeßwerte ($G_{Ist}$, $t_{Ist}$) den Sollwerten ($G_{Soll}$, $t_{Soll}$) entsprechen.

**15.** Verfahren nach einem der Ansprüche 1 bis 14, wobei die Unterkante der Vorformlinge (1) durch mindestens eine Lichtschranke (14) erfaßt wird, welche die Zeitmessung der Extrusionszeit stoppt.

**16.** Verfahren nach einem der Ansprüche 1 bis 15, wobei die Meßeinrichtung mehrere horizontal nebeneinander angeordnete Lichtschranken (14) aufweist und die von den Lichtschranken (14) gestoppten Zeitmeßwerte miteinander verglichen werden und wobei ein dem Vorformling (1) zugeordnetes Fehlersignal gespeichert wird, wenn die Zeitdifferenzen zwischen den gestoppten Zeitmeßwerten außerhalb eines vorgegebenen Toleranzbereiches liegen.

**17.** Verfahren nach Anspruch 16, wobei das Fehlersignal zum Ausschleusen des aus dem betreffenden Vorformling (1) geformten Hohlkörpers (7') und/oder als Regelgröße zur Veränderung eines Betriebsparameters des Extrusionsblasverfahrens verwendet wird.

18. Verfahren nach Anspruch 17, wobei nach Maßgabe der zeitlichen Abfolge der dem Fehlersignal zugrundeliegenden Meßsignale die Stützluftmenge oder ein schiefer Schlauchlauf korrigiert wird.

19. Verfahren nach einem der Ansprüche 15 bis 19, wobei die Lichtschranken. (14) in Gruppen angeordnet sind, die horizontal unter einem Winkel von vorzugsweise 90° zueinander ausgerichtet sind und jeweils mindestens zwei parallele Lichtschranken (14) umfassen.

20. Verfahren nach einem der Ansprüche 15 bis 19, wobei durch Mittelwertbildung der von den Lichtschranken gestoppten Zeitmeßwerte die für den Sollwertvergleich eingesetzte Extrusionszeit ($t_{Ist}$) bestimmt wird.

21. Verfahren nach einem der Ansprüche 1 bis 14, wobei bei der Extrusion an der Außenseite des Vorformlings (1) eine Markierung angebracht wird und wobei für die Messung der für den Sollwertvergleich eingesetzten Extrusionszeit eine die Markierung erfassende Meßeinrichtung verwendet wird.

22. Verfahren nach einem der Ansprüche 1 bis 21, wobei mehrere Meßeinrichtungen (10b, 10a, 9) in der Vorformlingsextrusionsrichtung zum Zwecke der Lagekontrolle, Längeneinstellung oder Längenregelung vorgesehen sind.

23. Verfahren nach einem der Ansprüche 1 bis 22, wobei durch mehrere in Extrusionsrichtung untereinander angeordnete Meßeinrichtungen (10b, 10a, 9) und durch einen Extrusionszeitvergleich der damit gemessenen Extrusionszeiten Betriebsparameter zum Ausgleich von Durchhängung und/oder Schrumpfung ermittelt werden.

24. Verfahren nach Anspruch 23, wobei zum Zwecke einer Feinkorrektur eine Korrektur der Programmkurve (13, 14, 15) vorgenommen wird, wenn die Sollwertabweichungen ($\Delta t$) der von den Meßeinrichtungen (10b, 10a, 9) gemessenen Extrusionszeiten untereinander differieren.

25. Verfahren nach einem der Ansprüche 1 bis 24, wobei die Zeitmessung synchron oder taktversetzt mit dem Beginn des Arbeitstaktes oder durch ein Meßsignal einer unterhalb des Düsenspaltes (4) angeordneten optischen Meßeinrichtung gestartet wird.

26. Verfahren nach einem der Ansprüche 1 bis 25, wobei ein dem Vorformling (1) zugeordnetes Signal gespeichert wird, wenn die Sollwertabweichung der Extrusionszeit außerhalb eines vorgegebenen betrieblichen Toleranzfeldes ($t_{Tol2-}$, $t_{Tol\ 2+}$) liegt und wobei das Signal zum Ausschleusen fehlerbehafteter Hohlkörper (7') verwendet wird.

27. Verfahren nach Anspruch 26, wobei das Signal eine Sortiervorrichtung (11) steuert, wenn der aus einem mit dem Signal belegten Vorformling (1) geblasene Hohlkörper (7') die Sortiervorrichtung (11) erreicht, und dadurch der betreffende Hohlkörper (7') ausgeschleust wird.

28. Verfahren nach einem der Ansprüche 1 bis 27, wobei zu den Sollwertabweichungen ($\Delta t$) von der Extrusionszeit ($t_{Ist}$) Häufigkeitsverteilungen erstellt und gespeichert werden und wobei die inneren Grenzwerte ($t_{Tol-1}$, $t_{Tol+1}$) und/oder die äußeren Grenzwerte ($t_{Tol-2}$, $t_{Tol+2}$) des betrieblichen Toleranzfeldes in Abhängigkeit von der geltenden Häufigkeitsverteilung verändert werden.

29. Verfahren nach einem der Ansprüche 26 bis 28, wobei das Sollgewicht ($G_{Soll}$) in Abhängigkeit von der Breite des betrieblichen Toleranzfeldes verändert wird und wobei einem schmalen Tolerenzfeld ein kleineres Sollgewicht und einem breiteren Toleranzfeld ein größeres Sollgewicht zugeordnet ist.

**Claims**

1. A process for extrusion blow moulding of hollow members from thermoplastic, wherein tubular preforms (1) are extruded by a screw extruder (2) from the die gap (4) of an extrusion head (5) controlled in accordance with a wall thickness program (3), and in subsequent work cycles the extruded preforms (1) are expanded in a blow mould (6) to form hollow members (7), which are taken out of the mould and any adhering flashes are removed, wherein

   the extrusion time ($t_{Ist}$) required by each preform (1) to reach a predetermined tube length is measured, the deviation ($\Delta t$) thereof from a set value ($t_{Soll}$) is determined, and the deviation ($\Delta t$) is stored in a computer (8) together with the actual speed ($n_S$) of the screw extruder (2) and/or the change ($\Delta n_S$) in the said speed and the actual nozzle gap ($S_A$) and/or the change ($\Delta s_A$) in the nozzle gap in association with the preform (1) and hollow members (7) made therefrom,

the weight ($G_{Ist}$) of the hollow members (7) is measured and deviations ($\Delta G$) from a preset weight ($G_{Soll}$) with the associated stored deviations ($\Delta t$) from the set extrusion time are used in pairs as control deviations for determining any corrections ($\Delta n_S$, $\Delta s_A$) required in the speed or the die gap and

the operating parameters ($n_S$, $s_A$) for the extrusion are determined in a subsequent work cycle from the stored speed and die-gap values and the calculated speed and die-gap corrections ($\Delta n_S$, $\Delta s_A$).

2. A process according to claim 1, wherein a newly occurring deviation ($\Delta t$) from the set extrusion time exceeding a set limit ($t_{Tol-1}$, $t_{Tol+1}$) is eliminated in the next working cycle by changing the screw speed ($\Delta n_S$) and/or by changing the die gap ($\Delta s_A$) without regard to the not yet available weight measurement.

3. A process according to claim 1, wherein in time with the production of the preform, a value for correcting the position of the preform (1) is activated if the deviation ($\Delta t$) of the measured extrusion time from the set value exceeds a set limit ($t_{Tol-1}$, $t_{Tol+1}$) wherein the extrusion time is measured by a measuring device (10a, 10b) disposed along the extrusion path at a distance from the bottom edge of the completely extruded preform.

4. A method according to claim 3, wherein the value for correcting the position of the preform (1) is so chosen so that the preform cross-section associated with a function maximum (KP1, KP2) of the wall thickness program (3) is positioned in the blow mould (6) at the place where a maximum stretching associated with the function maximum occurs during the blowing process.

5. A process according to any one of claims 1 to 4, wherein changes in the screw speed ($\Delta n_S$) and in the die gap ($\Delta s_A$) are introduced only if the deviations ($\Delta t$) of the extrusion time from the set value are within a preset tolerance range defined by inner limits ($t_{Tol-1}$, $t_{Tol+1}$) and outer limits ($t_{Tol-2}$, $t_{Tol+2}$), wherein the inner limits ($t_{Tol-1}$, $t_{Tol+1}$) define a narrow band range with positive and negative deviations from the set value ($t_{Soll}$) of the extrusion time and wherein the outer limits ($t_{Tol-2}$, $t_{Tol+2}$) define maximum permissible positive and negative deviations from the set value ($t_{Soll}$) of the extrusion time.

6. A process according to any of claims 1 to 5, wherein the speed ($n_S$) of the screw extruder (2) is changed in dependence on the deviations ($\Delta G$) from the preset weight ($G_{Soll}$) and wherein the die gap ($s_A$) is corrected in dependence on the weight deviations ($\Delta G$) in conjunction with the associated deviations ($\Delta t$) from the set extrusion time.

7. A process according to claim 6, wherein the change ($\Delta n_S$) in the screw speed ($n_S$) and the adjustment ($\Delta s_A$) of the die gap ($s_A$) are made in dependence on the measured extrusion time and the measured weight ($t_{Ist}$, $G_{Ist}$) and the associated set values ($t_{Soll}$, $G_{Soll}$) in accordance with the following algorithm

8. A process according to claim 6 or 7, wherein

$$\Delta\, n_s = n_s \bullet \frac{(G_{Soll} - G_{Ist})}{G_{soll}}$$

$$S_A = S_A \bullet (1 - \frac{t_{Ist}}{t_{Soll}} \bullet \frac{n_s}{n_s + \Delta n_s})$$

the weight measurement $G_{Ist}$ is the gross weight ($G_B$) of the hollow member including the adhering flashes, measured on removal from the mould.

9. A process according to any of claims 1 to 5, wherein the die gap ($s_A$) of the extrusion head is corrected in dependence on the deviations ($\Delta G$) from the set weight ($G_{Soll}$) and wherein the screw speed ($n_s$) is additionally changed in dependence on the weight deviations ($\Delta G$) in conjunction with the associated deviations ($\Delta t$) of the extrusion time from the set value.

**10.** A process according to claim 9, wherein the die gap is adjusted ($\Delta s_A$) and the screw speed ($n_S$) is changed ($\Delta n_S$) in dependence on the measured extrusion time and weight ($t_{Ist}$, $G_{Ist}$) and the associated set values ($t_{Soll}$, $G_{Soll}$) in accordance with the following algorithm:

$$\Delta S_A = S_A \cdot \frac{(G_{Soll} - G_{Ist})}{G_{soll}}$$

$$ns = ns \cdot (1 - \frac{t_{Soll}}{t_{Ist}} \cdot \frac{S_A}{S_A + \Delta S_A})$$

**11.** A process according to claim 9 or 10, wherein the measured weight ($G_{Ist}$) is the net weight ($G_N$) of the hollow member after removal of the flashes.

**12.** A process according to any of claims 1 to 11, wherein the extrusion time ($t_{Ist}$) is detected by a measuring device (9) positioned near the bottom edge of the completely extruded preform.

**13.** A process according to any of claims 1 to 11, wherein the extrusion time ($t_{Ist}$) is detected by a measuring device (10a, 10b) at a distance from the die gap (4) such that the said distance corresponds to the set length of a portion of the bottom edge of the preform or a reference marking up to a critical preform cross-section (KP1, KP2) associated with a function maximum of the wall thickness program (3).

**14.** A process according to any of claims 1 to 13, wherein for the purpose of precise correction, the relative motion between the blow mould (6) and the preform (1) is changed and/or the sequence of the wall thickness program (3) is displaced relative to the preform (1) or an intermediate stop is provided at a preset profile point and/or the moulding time is changed or another comparable time correction is made and/or the length of the curve portion (y3) of the wall thickness program (3) corresponding to the portion between the preform bottom edge and a critical cross-section (KP2) of the preform (1) relative to the subsequent stretching of the preform in the blow mould (6) is changed if a displacement of the critical cross-section (KP2) relative to the blow mould (6) is detected, even though the measured weight and extrusion time ($G_{Ist}$, $t_{Ist}$) correspond to the set values ($G_{Soll}$, $t_{Soll}$).

**15.** A process according to any of claims 1 to 14, wherein the bottom edge of the preform (1) is detected by at least one light barrier (14) which stops the measurement of the extrusion time.

**16.** A process according to any of claims 1 to 15, wherein the measuring device comprises a number of horizontal light barriers (14) disposed side by side and the time measurements stopped by the light barriers (14) are compared and wherein an error signal associated with the preform (1) is stored if the differences between the stopped time measurements are outside a preset tolerance range.

**17.** A process according to claim 16, wherein the error signal is used for ejecting the hollow member (7') moulded from the preform (1) in question and/or as a control variable for changing an operating parameter of the extrusion-blowing process.

**18.** A process according to claim 17, wherein the amount of back-up air or a skewed run of tubing is corrected in dependence on the sequence in time of the measured signals on which the error signal is based.

**19.** A process according to any of claims 15 to 19, wherein the light barriers (14) are disposed in groups aligned horizontally at an angle of preferably 90° to one another, each group comprising at least two parallel light barriers (14).

**20.** A process according to any of claims 15 to 19, wherein the time measurements stopped by the light barriers are averaged in order to determine the extrusion time ($t_{Ist}$) used for comparison with the set value.

**21.** A process according to any of claims 1 to 14, wherein during extrusion a marking is made on the outside of the preform (1) and wherein a device for detecting the marking is used for measuring the extrusion time used for comparison with the set value.

**22.** A process according to any of claims 1 to 21, wherein a number of measuring devices (10b, 10a, 9) are provided in the preform extrusion device for checking the position, setting the length or adjusting the length.

**23.** A process according to any of claims 1 to 22, wherein a number of measuring devices (10b, 10a, 9) are disposed one beneath the other in the extrusion direction and the extrusion times measured therewith are compared in order to obtain operating parameters for compensating sagging and/or shrinkage.

**24.** A process according to claim 23, wherein for the purpose of precise correction, the program curve (13, 14, 15) is corrected if the deviations ($\Delta t$) from the set value between the extrusion times measured by the measuring devices (10b, 10a, 9) differ from one another.

**25.** A process according to any of claims 1 to 24, wherein the time measurement is started in synchronism with or offset at each cycle from the beginning of the work cycle or by a signal from an optical measuring device disposed underneath the die gap (4) .

**26.** A process according to any of claims 1 to 25, wherein a signal associated with the preform (1) is stored if the deviation of the extrusion time from the set value is above a preset operating tolerance range ($t_{Tol2-}$, $t_{Tol2+}$) and wherein the signal is used for ejecting faulty hollow members (7').

**27.** A process according to claim 26, wherein the signal actuates a sorting device (11) when the hollow member (7') blown from a preform (1) designated by the signal reaches the sorting device (11), and the hollow member (7') in question is ejected as a result.

**28.** A process according to any of claims 1 to 27, wherein frequency distributions relating to the deviations ($\Delta t$) of the extrusion time ($t_{Ist}$) from the set value are compiled and stored and wherein the inner limits ($t_{Tol-1}$, $t_{Tol+1}$) and/or the outer limits ($t_{Tol-2}$, $t_{Tol+2}$) of the operating tolerance range are used in dependence on the current frequency distribution.

**29.** A process according to any of claims 26 to 28, wherein the set weight ($G_{Soll}$) is changed in dependence on the width of the operating tolerance range and wherein a smaller set weight is associated with a narrow tolerance range and a greater set weight is associated with a wider tolerance range.

**Revendications**

**1.** Procédé d'extrusion-soufflage de corps creux en matière thermoplastique, dans lequel on extrude des préformes (1) sous forme de tuyaux souples, au moyen d'une extrudeuse à vis (2), à travers l'ouverture de buse (4) d'une tête d'extrusion (5), contrôlée en fonction d'un programme d'épaisseur de paroi (3), puis au cours d'étapes consécutives, on élargit les préformes (1) extrudées dans un moule de soufflage (6) aux fins de former des corps creux (7), on démoule les corps creux (7) et on élimine les bavures adhérentes, procédé dans lequel

- on mesure pour chaque préforme (1), le temps d'extrusion ($t_{ist}$) nécessaire jusqu'à l'obtention d'une longueur de tuyau prédéterminée, on détermine son écart ($\Delta t$) par rapport à une valeur de consigne ($t_{soll}$) et on mémorise dans un calculateur (8) l'écart ($\Delta t$) par rapport à la valeur de consigne ainsi que la valeur réelle pour la vitesse de rotation ($n_S$) et/ou la variation de la vitesse de rotation ($\Delta n_S$) de l'extrudeuse à vis (2), ainsi que la valeur réelle pour l'ouverture de buse ($s_A$) et/ou la variation ($\Delta s_A$) de l'ouverture de buse en relation avec la préforme (1) et le corps creux (7) façonné à partir de celle-ci,
- on mesure les poids ($G_{ist}$) des corps creux (7) et on utilise les écarts de poids ($\Delta_G$) par rapport à un poids de consigne ($G_{soll}$) avec les variations ($\Delta_t$) par rapport à la consigne du temps d'extrusion, par paires comme grandeurs de réglage pou déterminer les corrections nécessaires de la vitesse de rotation et de l'ouverture de buse ($\Delta n_S$, $\Delta s_A$) et
- à partir des valeurs mémorisées pour la vitesse de rotation et l'ouverture de buse ainsi que des corrections déterminées pour la vitesse de rotation et l'ouverture de buse ($\Delta n_S$, $As_A$), on détermine au cours d'une étape consécutive les paramètres de fonctionnement ($n_S$, $s_A$) pour l'extrusion.

**2.** Procédé selon la revendication 1, dans lequel une nouvelle variation ($\Delta t$) par rapport à la consigne du temps d'extrusion, qui dépasse une valeur seuil prédéterminée ($t_{Tol-1}$, $t_{Tol+1}$) est éliminée au cours de l'étape consécutive, par modification de la vitesse de rotation de la vis d'extrudeuse ($\Delta n_s$) et/ou par modification de l'ouverture de buse

($\Delta s_A$), sans tenir compte de la valeur de mesure qui n'est pas encore disponible pour le poids.

3.  Procédé selon la revendication 1, dans lequel dès l'étape de façonnage de la préforme on active une grandeur de réglage pour la correction de la position de la préforme (1), lorsque l'écart ($\Delta t$) par rapport à la consigne pour le temps d'extrusion mesuré, dépasse une valeur seuil prédéterminée ($t_{Tol-1}$, $t_{Tol+1}$), un dispositif de mesure (10a, 10b) qui est disposé le long du trajet d'extrusion, à distance du bord inférieur de la préforme complètement extrudée, étant utilisé pour la mesure du temps d'extrusion.

4.  Procédé selon la revendication 3, dans lequel la grandeur de réglage pour la correction de la position de la préforme (1) a une valeur telle, que la section de la préforme associée à un maximum fonctionnel (KP1, KP2) du programme d'épaisseur de paroi (3) soit positionnée dans le moule de soufflage (6), à l'endroit où, lors de l'opération de soufflage, a lieu un étirement maximal correspondant au maximum fonctionnel.

5.  Procédé selon une des revendications 1 à 4, dans lequel les modifications de la vitesse de rotation de la vis d'extrudeuse ($\Delta n_s$) et/ou de l'ouverture de buse ($\Delta s_A$) ne sont déclenchées que lorsque les écarts ($\Delta t$) par rapport à la consigne du temps d'extrusion se situent à l'intérieur d'une plage de tolérance délimitée par des valeurs seuils internes ($t_{Tol-1}$, $t_{Tol+1}$) et des valeurs seuils externes ($t_{Tol-2}$, $t_{Tol+2}$), les valeurs seuils internes ($t_{Tol-1}$, $t_{Tol+1}$) définissant une bande étroite avec des écarts positifs et négatifs par rapport à la consigne ($t_{soll}$) pour le temps d'extrusion et les valeurs seuils externes ($t_{Tol-2}$, $t_{Tol+2}$) définissant les écarts positifs et négatifs maximaux admissibles par rapport à la consigne ($t_{soll}$) pour le temps d'extrusion.

6.  Procédé selon une des revendications 1 à 5, dans lequel on modifie la vitesse de rotation ($n_S$) de l'extrudeuse à vis (2) en fonction des écarts de poids ($\Delta G$) par rapport aux poids de consigne ($G_{soll}$) prédéterminés et dans lequel, en fonction des écarts de poids ($\Delta G$), en liaison avec les écarts ($\Delta t$) correspondants par rapport à la consigne pour le temps d'extrusion, on procède en outre à une correction de l'ouverture de buse ($s_A$).

7.  Procédé selon la revendication 6, dans lequel la modification ($\Delta n_S$) de la vitesse de rotation de la vis ($n_S$) et le réglage ($\Delta S_A$) de l'ouverture de buse ($s_A$) en fonction du temps d'extrusion et des valeurs de poids mesurées ($t_{ist}$, $G_{ist}$) et des valeurs de consignes ($t_{soll}$, $G_{soll}$) associées ont lieu selon l'algorithme suivant :

$$\Delta\, n_s = n_s \,*\, \frac{G_{Soll} - G_{Ist}}{G_{soll}}$$

$$s_A \;=\; s_A \;*\; \left( \frac{t_{ist}}{t_{soll}} \;*\; \frac{n_s}{n_s \,+\, \Delta n_s} \right)$$

8.  Procédé selon la revendication 6 ou 7, dans lequel on utilise comme valeur de poids ($G_{ist}$) le poids brut ($G_B$) des corps creux, bavures comprises, mesuré après extraction du moule de soufflage.

9.  Procédé selon une des revendications 1 à 5, dans lequel on corrige l'ouverture de buse ($s_A$) de la tête d'extrusion en fonction des écarts de poids ($\Delta G$) par rapport au poids de consigne ($G_{soll}$) et dans lequel on fait varier la vitesse de rotation de la vis ($n_s$) en fonction des écarts de poids ($\Delta G$), en liaison avec les écarts ($\Delta t$) par rapport à la consigne pour le temps d'extrusion.

10. Procédé selon la revendication 9, dans lequel le réglage de l'ouverture de buse ($\Delta s_A$) et la modification ($\Delta n_S$) de la vitesse de rotation de la vis ($n_S$) en fonction du temps d'extrusion et des valeurs de poids mesurées ($t_{ist}$, $G_{ist}$) ainsi que des valeurs de consignes ($t_{soll}$, $G_{soll}$) associées ont lieu selon l'algorithme suivant :

$$\Delta\, S_A = S_A \,*\, \frac{G_{Soll} - G_{Ist}}{G_{soll}}$$

$$n_s \;=\; n_s \;*\; \left( \frac{t_{ist}}{t_{soll}} \;*\; \frac{s_A}{s_A \,+\, \Delta s_A} \right)$$

**11.** Procédé selon la revendication 9 ou 10, dans lequel on utilise comme valeur de poids mesurée ($G_{ist}$), le poids net ($G_N$) du corps creux après élimination des bavures

**12.** Procédé selon une des revendications 1 à 11, dans lequel on mesure le temps d'extrusion ($t_{ist}$) à l'aide d'un dispositif de mesure (9) qui est positionné dans le voisinage du bord inférieur de la préforme complètement extrudée.

**13.** Procédé selon une des revendications 1 à 11, dans lequel on mesure le temps d'extrusion ($t_{ist}$) à l'aide d'un dispositif de mesure (10a, 10b), dont la distance par rapport à l'ouverture de buse (4) est telle, que ladite distance corresponde à la longueur de consigne d'un tronçon de préforme, à partir du bord inférieur de la préforme ou d'un repère de référence jusqu'à une section critique (KP1, KP2) de la préforme associée à un maximum fonctionnel du programme d'épaisseur de paroi (3).

**14.** Procédé selon une des revendications 1 à 13, dans lequel, à des fins de correction fine, on modifie le déplacement relatif entre le moule de soufflage (6) et la préforme (1), et/ou on décale le déroulement du programme d'épaisseur de paroi (3) par rapport à la préforme (1), ou on place un arrêt intermédiaire en un point déterminé du profil et/ou on modifie le temps de formage ou on procède à une correction de temps équivalente et/ou on modifie dans le programme d'épaisseur de paroi (3) la longueur du tronçon de courbe (y3) qui est associé au tronçon de préforme, entre le bord inférieur de la préforme et une section (KP2) de la préforme (1) critique du point de vue de l'étirement qui a lieu par la suite dans le moule de soufflage (6), lorsqu'on constate un décalage de la section critique (KP2) par rapport au moule de soufflage (6), bien que les valeurs mesurées pour le poids et le temps d'extrusion ($G_{ist}$, $t_{ist}$) correspondent aux valeurs de consigne ($G_{soll}$, $t_{soll}$).

**15.** Procédé selon une des revendications 1 à 14, dans lequel on détecte le bord inférieur de la préforme (1) à l'aide d'au moins un barrage photoélectrique qui déclenche l'arrêt de la mesure du temps d'extrusion.

**16.** Procédé selon une des revendications 1 à 15, dans lequel le dispositif de mesure comporte plusieurs barrages photoélectriques (14) disposés horizontalement l'un à côté de l'autre et on compare entre eux les temps mesurés par les barrages photoélectriques (14) et dans lequel on mémorise un signal d'erreur associé à la préforme (1), lorsque les différences entre les temps mesurés se situent en dehors d'une plage de tolérances prédéterminée.

**17.** Procédé selon la revendication 16, dans lequel on utilise le signal d'erreur pour évacuer le corps creux (7') façonné à partir de la préforme (1) concernée et/ou comme grandeur de réglage pour modifier un paramètre de fonctionnement du procédé d'extrusion-soufflage.

**18.** Procédé selon la revendication 17, dans lequel en fonction de la succession dans le temps des signaux à la base du signal d'erreur, on corrige le débit d'air de support ou une avance en biais du tuyau.

**19.** Procédé selon une des revendications 15 à 19, dans lequel les barrages photoélectriques (14) sont disposés en groupes orientés de référence à 90° les uns par rapport aux autres horizontalement, qui comprennent chacun au moins deux barrages photoélectriques (14) parallèles.

**20.** Procédé selon une des revendications 15 à 19, dans lequel on détermine, par calcul de la moyenne des valeurs mesurées par les barrages photoélectriques, le temps d'extrusion ($t_{ist}$) utilisé pour la comparaison avec la valeur de consigne.

**21.** Procédé selon une des revendications 1 à 14, dans lequel, lors de l'extrusion, on applique un repère sur la face extérieure de la préforme et, pour la mesure du temps d'extrusion utilisé pour la comparaison avec la valeur de consigne, on utilise un dispositif de mesure qui détecte le repère.

**22.** Procédé selon une des revendications 1 à 21, dans lequel plusieurs dispositifs de mesure (10b, 10a, 9) sont prévus dans la direction d'extrusion de la préforme, aux fins de contrôler le positionnement, de régler la longueur ou de réguler la longueur.

**23.** Procédé selon une des revendications 1 à 22, dans lequel grâce à plusieurs dispositifs de mesure (10b, 10a, 9) disposés les uns au-dessous des autres dans la direction d'extrusion et par une comparaison des temps d'extrusion ainsi mesurés, on détermine des paramètres de fonctionnement pour compenser les relâchements et/ou les contractions.

**24.** Procédé selon la revendication 23, dans lequel à des fins de correction fine, on procède à une correction de la courbe de programme (13, 14, 15) lorsque les écarts ($\Delta$t) par rapport à la consigne des temps d'extrusion, mesurés par les dispositifs de mesure (10b, 10a, 9), divergent.

**25.** Procédé selon une des revendications 1 à 24, dans lequel la mesure du temps est lancée de manière synchrone ou décalée avec le début du cycle de travail ou est lancée par un signal de mesure d'un dispositif de mesure optique disposé au-dessous de l'ouverture de buse (4).

**26.** Procédé selon une des revendications 1 à 25, dans lequel on mémorise un signal associé à la préforme (1), lorsque l'écart par rapport à la consigne pour le temps d'extrusion est situé en dehors d'une plage de tolérances ($t_{Tol2-}$, $t_{Tol+2}$) prédéterminée et dans lequel on utilise le signal pour éliminer les corps creux (7') défectueux.

**27.** Procédé selon la revendication 26, dans lequel le signal commande un dispositif de tri (11), lorsque le corps creux (7') soufflé à partir de la préforme (1) marquée du signal atteint le dispositif de tri (11) et qu'ainsi le corps creux (7') concerné est éliminé.

**28.** Procédé selon une des revendications 1 à 27, dans lequel on établit et on mémorise des diagrammes de fréquence d'apparition pour les écarts par rapport à la consigne ($\Delta$t) du temps d'extrusion ($t_{ist}$) et dans lequel on modifie les valeurs seuils intérieure ($t_{Tol-1}$, $t_{Tol+1}$) et/ou les valeurs seuils extérieures ($t_{Tol-2}$, $t_{Tol+2}$) de la plage de tolérances de fonctionnement en fonction de la répartition actuelle en fréquence.

**29.** Procédé selon une des revendications 26 à 28, dans lequel on modifie le poids de consigne ($G_{soll}$) en fonction de la largeur de la plage de tolérances de fonctionnement et dans lequel on associe un poids de consigne plus faible à une plage de tolérances étroite et un poids de consigne plus élevé à une plage de tolérances plus large

Fig.1

Fig.2

Fig.3

Fig.4